# EUROPEAN PATENT APPLICATION

(11) **EP 4 617 939 A1**
(43) Date of publication of application: **17.09.2025**
(21) Application number: 25163592.6
(22) Date of filing: 13.03.2025
(51) Int. Cl.: G06F 30/20, H04L 9/32, H04L 9/00, G06T 11/00

(54) **METHODS AND SYSTEMS FOR GENERATING PERSONALIZED DESIGNS**

(30) Priority: 15.03.2024 IN 202421019303
(71) Applicant: Tata Consultancy Services Limited, Mumbai, Maharashtra 400 021 (IN)
(72) Inventor: SANKARAN, Lakshmi, 600096 Chennai, Tamil Nadu (IN); UNNI KRISHNAN NAIR, Usha, 600096 Chennai, Tamil Nadu (IN); SRIDHAR, Priyadharshini, 600096 Chennai, Tamil Nadu (IN); SRINIVASAN, Swarna, 600096 Chennai, Tamil Nadu (IN); CHAUDHARY, Hritik Bharat, 603103 Chennai, Tamil Nadu (IN)
(74) Representative: Goddar, Heinz J.

(57) **Abstract**

The disclosure relates generally to methods and systems for generating personalized designs based on a personalized input provided by a user. Conventional techniques for personalized designs lack a democratized design content platform to connect retailers, designers or digital artists or creative coders or generative artists and the customers. According to the present disclosure, the customer or a user provides personalized input. Further, the customer or the user is allowed to choose a generative design of interest by selecting a suitable generative design algorithm from a list of generative design algorithms. The personalized input provided by the customer is then transformed as a hash value which is used to determine a set of design parameters based on a set of design attributes, using a random number generation technique. Finally, the set of design parameters are then used to generate an exclusive personalized design.

## Description

### CROSS-REFERENCE TO RELATED APPLICATIONS AND PRIORITY

The present application claims priority to Indian application no. 202421019303, filed on March 15, 2024.

### TECHNICAL FIELD

The disclosure herein generally relates to personalized designs, and, more particularly, to methods and systems for generating personalized designs based on a personalized input provided by a user.

### BACKGROUND

Product personalisation got huge scope nowadays especially in the retail industry. Retailers have to offer aesthetic, personalized designs for their customers at scale in order to attract the customers and improve their business. To meet the needs of the customers, the retailers need to connect the customers with exclusive designers who would create a personalized product for the customer. This is both time and cost intensive and does not scale. Another way is to modularize their product/design into parts that could be customized like color, text, designs etc. But these could be picked by the customer either from a pre-defined set of offerings or by providing personal information. While this way can scale better than connecting with the exclusive designers, the scope for the personalization is very limited.

Further, there is a need for the customers to have an immersive product selection experience by interacting with the digital replica of the product. Ownership of singular design rights of each product is another aspect where every design should have a unique verifiable signature and the design should be retraceable and reproducible. Hence, the conventional techniques lack a democratized design content platform to connect retailers, designers or digital artists or creative coders or generative artists (design ecosystem players) and the customers.

### SUMMARY

Embodiments of the present disclosure present technological improvements as solutions to one or more of the above-mentioned technical problems recognized by the inventors in conventional systems.

In an aspect, a processor-implemented method for generating personalized designs is provided. The method including the steps of: receiving a personalized input whose personalized design is to be generated, from a user, wherein the personalized input is one of (i) a text, (ii) an image, (iii) a video, (iv) an audio, (v) a date-time stamp, and (vi) a number; allowing the user to select a generative design algorithm out of a plurality of generative design algorithms stored in a repository, wherein each of the plurality of generative design algorithms comprises a plurality of design parameters; generating a hash value of the personalized input using a secure hash algorithm; converting the hash value to obtain a decimal value of the personalized input using a hash-to-decimal conversion technique; determining a design parameter value of each of the plurality of design parameters of the selected generated design algorithm, using the decimal value and a plurality of design attributes of each of the plurality of design parameters, by employing a random number generating technique; generating a personalized design for the personalized input, by passing the design parameter value of each of the plurality of design parameters to the selected generative design algorithm; tokenizing the personalized design generated for the personalized input as a non-fungible token in blockchain; validating and tuning the plurality of design parameters of a customized generative design algorithm generated by the user; verifying a parameter range of each of the plurality of design parameters of the customized generative design algorithm; validating a design output generated by the customized generative design algorithm; and adding the customized generative design algorithm to the plurality of generative design algorithms.

**In** another aspect, a system for generating personalized designs is provided. The system includes: a memory storing instructions; one or more Input/Output (I/O) interfaces; and one or more hardware processors coupled to the memory via the one or more I/O interfaces, wherein the one or more hardware processors are configured by the instructions to: receive a personalized input whose personalized design is to be generated, from a user, wherein the personalized input is one of (i) a text, (ii) an image, (iii) a video, (iv) an audio, (v) a date-time stamp, and (vi) a number; allow the user to select a generative design algorithm out of a plurality of generative design algorithms stored in a repository, wherein each of the plurality of generative design algorithms comprises a plurality of design parameters; generate a hash value of the personalized input using a secure hash algorithm; convert the hash value to obtain a decimal value of the personalized input using a hash-to-decimal conversion technique; determine a design parameter value of each of the plurality of design parameters of the selected generated design algorithm, using the decimal value and a plurality of design attributes of each of the plurality of design parameters, by employing a random number generating technique; generate a personalized design for the personalized input, by passing the design parameter value of each of the plurality of design parameters to the selected generative design algorithm; tokenize the personalized design generated for the personalized input as a non-fungible token in blockchain; validate and tune the plurality of design parameters of a customized generative design algorithm generated by the user; verify a parameter range of each of the plurality of design parameters of the customized generative design algorithm; validate a design output generated by the customized generative design algorithm; and add the customized generative design algorithm to the plurality of generative design algorithms.

**In** yet another aspect, there are provided one or more non-transitory machine-readable information storage mediums comprising one or more instructions which when executed by one or more hardware processors cause: receiving a personalized input whose personalized design is to be generated, from a user, wherein the personalized input is one of (i) a text, (ii) an image, (iii) a video, (iv) an audio, (v) a date-time stamp, and (vi) a number; allowing the user to select a generative design algorithm out of a plurality of generative design algorithms stored in a repository, wherein each of the plurality of generative design algorithms comprises a plurality of design parameters; generating a hash value of the personalized input using a secure hash algorithm; converting the hash value to obtain a decimal value of the personalized input using a hash-to-decimal conversion technique; determining a design parameter value of each of the plurality of design parameters of the selected generated design algorithm, using the decimal value and a plurality of design attributes of each of the plurality of design parameters, by employing a random number generating technique; generating a personalized design for the personalized input, by passing the design parameter value of each of the plurality of design parameters to the selected generative design algorithm; tokenizing the personalized design generated for the personalized input as a non-fungible token in blockchain; validating and tuning the plurality of design parameters of a customized generative design algorithm generated by the user; verifying a parameter range of each of the plurality of design parameters of the customized generative design algorithm; validating a design output generated by the customized generative design algorithm; and adding the customized generative design algorithm to the plurality of generative design algorithms.

In an embodiment, each generative design algorithm of the plurality of generative design algorithms comprises a unique set of physics-based models and a predefined set of rules.

In an embodiment, the hash value of the personalized input is generated using the secure hash algorithm, by: translating the personalized input to obtain a binary string of the personalized input, using an encoding technique; appending and adding binary digits to the binary string of the personalized input, to obtain a transformed binary string of the personalized input, wherein the binary digits are appended and added until the transformed binary string becomes a multiple of predefined number of bits, using the secure hash algorithm; and generating the hash value of the personalized input by applying a cryptographic hash function of the secure hash algorithm and performing a set of bitwise operations on the transformed binary string.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for generating personalized designs, in accordance with some embodiments of the present disclosure.
FIGS. 2A-2B illustrate exemplary flow diagrams of a processor-implemented method for generating personalized designs, using the system of FIG. 1, in accordance with some embodiments of the present disclosure.
FIG. 3 is a flow chart illustrating the steps for generating the hash value of the personalized input using the secure hash algorithm, in accordance with some embodiments of the present disclosure.
FIG. 4 is an exemplary block diagram of an aesthetic generative content design marketplace, in accordance with some embodiments of the present disclosure.
FIG. 5 shows how a textual input is converted into a personalized input, in accordance with some embodiments of the present disclosure.
FIG. 6 shows how a memorable date is converted into the personalized design, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

The present disclosure solves the technical problems in the art with the methods and systems for generating personalized designs, which provides an aesthetic generative art for mass personalization of the designs. According to the present disclosure, the customer or a user can provide personalized input which has to be present in their product. Further, the customer or the user is allowed to choose a generative design of interest by selecting a suitable generative design algorithm from a list of algorithms available in the repository of generative design algorithms. The personalized input provided by the customer is then transformed as a hash value which is used to determine a set of design parameters based on a set of design attributes, using a random number generation technique. Finally, the set of design parameters are then used to generate an exclusive (unique) personalized design using the selected generative design algorithm.

The methods and systems of the present disclosure transform any kind of personalized input received from the user into the set of design parameters which can be used to generate the exclusive personalized design. Further, the methods and systems of the present disclosure provide a platform for the customer to create a new generative design of interest (a new generative design algorithm), to generate their own aesthetic personalized designs. Hence the methods and systems of the present disclosure provide the democratized design content platform to connect the retailers, designers or digital artists or creative coders or generative artists (design ecosystem players) and the customers.

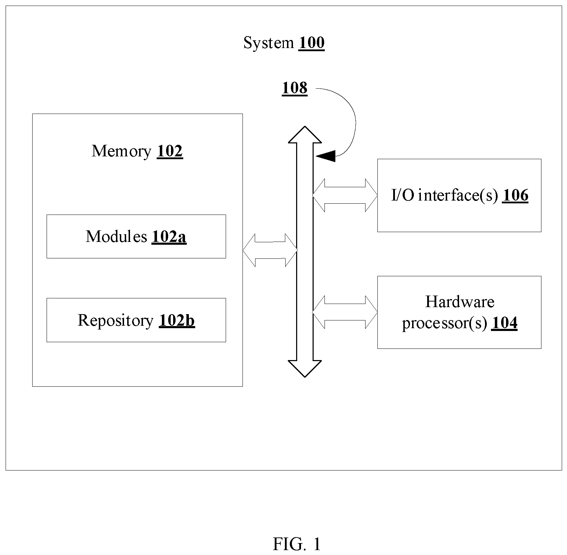

Referring now to the drawings, and more particularly to FIG. 1 through FIG. 6, where similar reference characters denote corresponding features consistently throughout the figures, there are shown preferred embodiments, and these embodiments are described in the context of the following exemplary system and/or method.

FIG. 1 is an exemplary block diagram of a system 100 for generating personalized designs, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

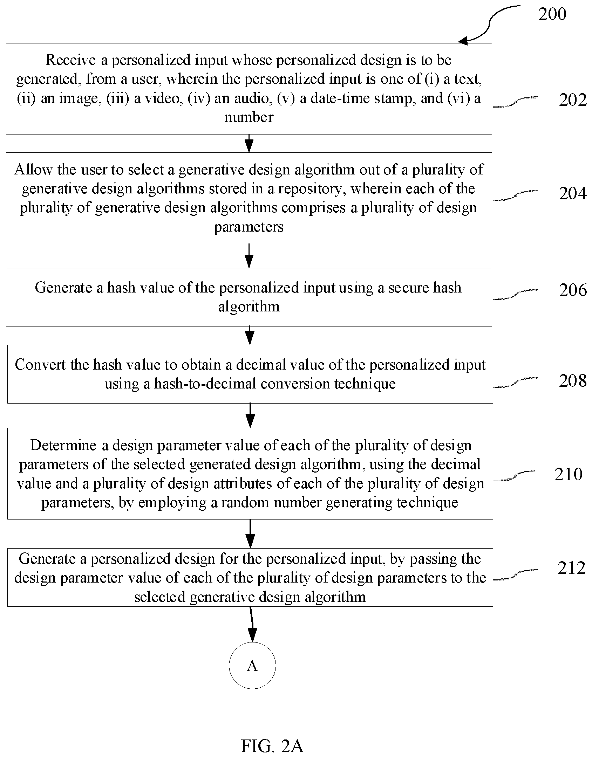

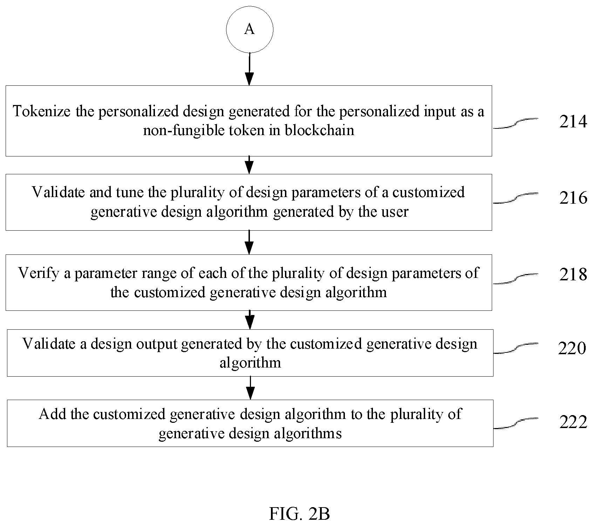

Referring to FIGS. 2A-2B, components and functionalities of the system 100 are described in accordance with an example embodiment of the present disclosure. For example, FIGS. 2A-2B illustrate exemplary flow diagrams of a processor-implemented method 200 for generating personalized designs, using the system of FIG. 1, in accordance with some embodiments of the present disclosure. Although the steps of the method 200 shown in FIGS. 2A-2B including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more hardware processors 104 of the system 100 are configured to receive a personalized input whose aesthetic personalized design is to be generated or based on which the aesthetic personalized design is to be generated. The personalized input is provided from the user or the customer to the retailer, or the designer. The personalized input is one of (i) a text, (ii) an image, (iii) a video, (iv) an audio, (v) a date-time stamp, or (vi) a number, and a combination thereof.

At step 204 of the method 200, the one or more hardware processors 104 of the system 100 are configured to allow the user to select a generative design algorithm out of a plurality of generative design algorithms. Each generative design algorithm refers to the generative personalized design that the customer is interested in. **In** an embodiment, the plurality of generative design algorithms is stored in the repository 102b. **In** an embodiment, each of the plurality of generative design algorithms comprises a plurality of design parameters that define the generative personalized design that the customer is interested in.

Each generative design algorithm of the plurality of generative design algorithms includes a unique set of physics-based models and a predefined set of rules. The unique set of physics-based models consists of mathematical formulae that could come from physics-based equations (e.g., reaction diffusion) or some rules (e.g., cellular automata) to create designs, the design parameters act as input to these formulae to create the generative designs.

Some of the plurality of generative design algorithms according to the present disclosure are: Chair Fractal design algorithm, Circle Multiplier design algorithm, Fern design algorithm, Line design algorithm, Maurer Rose design algorithm, Prim Factor design algorithm, Ripple design algorithm, Rose Rhodona design algorithm, Shape Grammar design algorithm, Snake Pattern design algorithm, Spiral design algorithm, Truchet design algorithm, Genetic design algorithm, Tile design algorithm, Toothpick design algorithm, Triangular and Hexagonal Cellular Automata design algorithm, Hexagon Meander, Totalistic Cellular Automation design algorithm, Fractal design algorithm, Sinus Meander design algorithm, Labyrinth design algorithm, and Meander design algorithm.

At step 206 of the method 200, the one or more hardware processors 104 of the system 100 are configured to generate a hash value of the personalized input using a secure hash algorithm. The secure hash algorithm generates the hash value irrespective of the type of the personalized input received at step 202 of the method 200, such as the text, the image, the video, the audio, the date-time stamp, the number, or the combination thereof. In an embodiment, the secure hash algorithm is a SHA-256 hashing algorithm or any suitable hashing algorithm that converts the given input into a unique hash value.

The SHA-256 hashing algorithm is a cryptographic hash function that takes an input and produces a fixed-size output in the form of a hash value. The produced output is unique to each unique input and appears random, making it extremely difficult to reverse-engineer the original message from the hash value. More specifically to the present disclosure, the SHA-256 hashing algorithm takes input in the form of binary and produces a corresponding unique hash value for that input. Irrespective of the length of the input, the output hash is always of 256 bits, usually in the form of a hexadecimal number. Hence before feeding into the SHA-256 hashing algorithm, the input is represented in the form of binary.

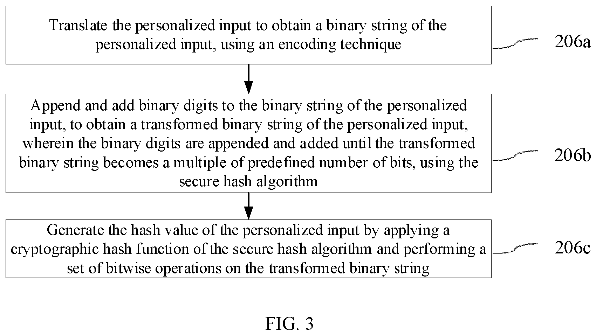

FIG. 3 is a flow chart illustrating the steps for generating the hash value of the personalized input using the secure hash algorithm, in accordance with some embodiments of the present disclosure. As shown in FIG. 3, generating the hash value of the personalized input using the secure hash algorithm is explained through steps 206a to 206c.

At step 206a, the personalized input received at step 202 of the method is translated to obtain a binary string of the personalized input, using an encoding technique. In an embodiment, the encoding technique is a Unicode Transformation Format (UTF)-8 encoding technique that is employed to translate the personalized input into the binary string.

At step 206b, binary digits are appended and added to the binary string of the personalized input, to obtain a transformed binary string of the personalized input. The binary digits are appended and added until the transformed binary string becomes a multiple of predefined number of bits, using the secure hash algorithm.

Initially a single 1 is appended after the binary string. Then, 0's are added after 1 to the binary string until it is a multiple of 512 bits short of 64 bits. Further, last 64 bits are expressed as a length of the binary string, wherein combination of input, added 1 and 0's and last 64 bits makes multiple 512 bits. Next, 8 hard coded constants are created by initializing SHA-256 cryptographic hash function, wherein these 8 hard code constants are 0x6a09e667, 0xbb67ae85, 0x3c6ef372, 0xa54ff53a, 0x510e527f, 0x9b05688c, 0x1f83d9ab, 0x5be0cd19. Further, additional 64 hash values are created by calculating the square roots of prime numbers. Next, the 8 hash values are combined with the 64 additional hash values. Next, the 512 bits are break down into multiple blocks to obtain the transformed binary string of the personalized input, wherein each block consists of 32 bits.

At step 206c, the hash value of the personalized input is generated by applying a cryptographic hash function of the secure hash algorithm and performing a set of bitwise operations on the transformed binary string obtained at step 206b. More specifically, the hash value is generated for the given user input by performing bitwise operations, logical functions (AND/OR/XOR), modular additions, rotations on each block until the last 512-bit block, wherein output of each block is given as input to the other block.

At step 208 of the method 200, the one or more hardware processors 104 of the system 100 are configured to convert the hash value generated at step 206 of the method 200 to obtain a decimal value of the personalized input. In an embodiment, a hash-to-decimal conversion technique is employed to convert the hash value into the decimal value of the personalized input.

The hash value of the personalized input generated at step 206 is in a hexadecimal format which is to be converted into the decimal format, more specifically from base-16 to base-10.

At step 210 of the method 200, the one or more hardware processors 104 of the system 100 are configured to determine a design parameter value of each of the plurality of design parameters of the generative design algorithm selected at step 204 of the method 200. The design parameter value of each of the plurality of design parameters are determined using the decimal value of the personalized input obtained at step 208 of the method and a plurality of design attributes of each of the plurality of design parameters. The plurality of design attributes refers to the design attributes of each design parameter, including but is not limited to a range of the parameters, number of parameters and a data type of the parameters. The number of parameters, the data type of the parameters and the range of the parameters are determined based on the selected generated design algorithm.

In an embodiment, a random number generating technique is employed to determine the design parameter value of each of the plurality of design parameters for the selected generated design algorithm using the decimal value of the personalized input and the plurality of design attributes of each of the plurality of design parameters.

More specifically, the decimal value is considered as a seed value for generating the random number, wherein the decimal value is considered as the seed value for the random number generator that keeps the same set of random numbers produced every time, since the seed is the first value taken as input by the random number generator algorithm. In an embodiment, the random number generator algorithm is a Mersenne Twister algorithm. Since the output from the SHA-256 algorithm, represented in its decimal form, is the random seed, it means that there is a one-to-one correspondence between the user input and the random seed. This ensures that the random numbers generated for that user input never change. These generated random numbers would become the parameters of the final generative design and hence we can reproducibly obtain the same generative design for any given user input. Since the seed value needs to be an integer, the hash output which has been expressed in base-10 is directly used as the seed.

The design parameter values within the range of values defined for the design parameter for a selected generative design algorithm by using Mersenne Twister algorithm (random number generator) based on the seed value and master list comprising the plurality of design attributes. The random number generator produces as many random numbers as there are design parameters in the chosen generative design algorithm, having the data types and ranges as required by that algorithm, wherein design parameters are those that when modified, produce a different design. The number, type and range of these parameters vary from one generative design algorithm to another. Whenever the random number generator is invoked with a random seed (corresponding to the user input), the master data file is accessed to obtain the specific parameter attributes for each generative design algorithm.

At step 212 of the method 200, the one or more hardware processors 104 of the system 100 are configured to generate the personalized design for the personalized input or based on the personalized input, by passing the design parameter value of each of the plurality of design parameters determined at step 210 of the method 200 to the generative design algorithm selected at step 204 of the method 200.

The physics-based equations (e.g., reaction diffusion) or the design rules (e.g., cellular automata) present in the selected generative design algorithm at step 204 generates the personalized design for the personalized input based on the design parameter value of each of the plurality of design parameters.

Further, at step 214 of the method 200, the one or more hardware processors 104 of the system 100 are configured to tokenize the personalized design generated at step 212 of the method 200 as a non-fungible token (NFT)t in blockchain. Firstly, the generated personalized design (image), along with its metadata (parameters, the image description) is considered as the data input. Next, the URL path is generated by adding the personalized design image into an InterPlanetary File System (IPFS). Then, the non-fungible token (NFT) is created with the IPFS URL by using a smart contract. Further, the NFT identity (ID) is obtained after performing the smart contract. Lastly, the created NFT is then displayed with contract owner details on NFT marketplace.

Further, at step 216 of the method 200, the one or more hardware processors 104 of the system 100 are configured to allow the user to generate a customized generative design algorithm. The main objective for allowing the user/design coder is to make a customed generative personalized design that the customer is interested in. Such customized generative design algorithm generated by the user is validated and tuned based on the corresponding plurality of design parameters.

At step 218 of the method 200, the one or more hardware processors 104 of the system 100 are configured to verify the parameter range of each of the plurality of design parameters of the customized generative design algorithm generated at step 216 during the validation. Further, at step 220 of the method 200, the one or more hardware processors 104 of the system 100 are configured to validate the design output generated by the customized generative design algorithm as well so that the customized generative design algorithm is matching with the required specification.

At step 222 of the method 200, the one or more hardware processors 104 of the system 100 are configured to add the customized generative design algorithm to the plurality of generative design algorithms, after the validation and finetuning at steps 216 through 220. More specifically, the customized generative design algorithm is added to the plurality of generative design algorithms stored in the repository 102b.

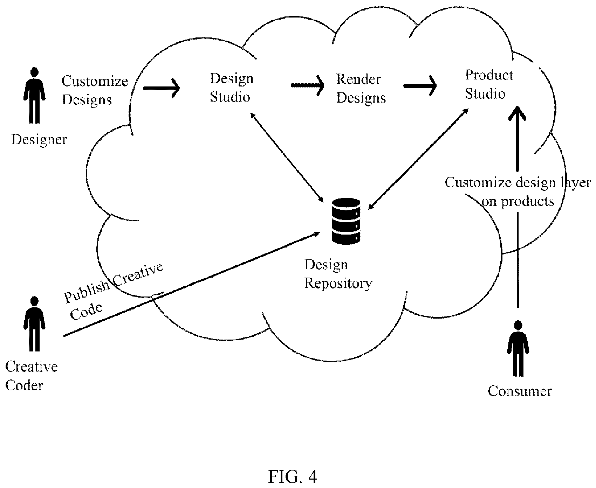

FIG. 4 is an exemplary block diagram of an aesthetic generative content design marketplace, in accordance with some embodiments of the present disclosure. As shown in FIG. 4, a marketplace solution is created on a micro-service based platform so that multiple stakeholders are able to come together and create value. If the user is a customer, the design and product studio enable the user to modify the design and product parameters in real time to get an interactive product customization experience. If the user is a designer who would like to have more control over the design creation process, the design studio also offers special design aids such as the Mandala creator. Frieze and Wallpaper group creator, tiling creator, and so on to augment the creative customization process. If the user is a creative coder, then the user can automatically generate and upload the customized generative design algorithm, following which the generated customized generative design algorithm is added to the plurality of generative design algorithms after the validation and finetuning as explained in steps 216 to 222 of the method 200.

The design studio consists of (a) Rule based filters, AI based clustering techniques, and the and aesthetic measure calculated from the entropy and complexity of the images to assist the user towards designs that appeal to the aesthetics and (b) an interactive user interface which displays the parameters that constitute each design. The user can modify these parameters and simultaneously observe the designs change with the parameters in real time. The range of values that the parameters can take is also pre-optimized such that it results in the best possible outputs. Further, the design studio allows the user or the customer to provide the personalized input which can get converted into the personalized design.

The product studio is a simulation environment where the digital replica of the product can be customized and visualized by the end user before finalizing. Different 3D models of each product are pre-built and available for the user to overlay the generative design on, to check if the user likes it. The user can vary the model parameters as well as the design parameters to arrive at a final choice.

The methods and systems of the present disclosure allow the designer to create new designs or customize them in the design studio to cater to the requirements of an end user. Rule based filtering and smart clustering through Artificial intelligence enables a user to arrive at a set of favorite designs over which customization can be performed. The design is served from a design repository database, which secures the algorithm generating the design. The parameters of the design are available in the front end for customization and the shortlisted designs can be saved and viewed anytime in the user profile. The design can also be taken to the product studio where it can be visualized on the product before finalizing.

Consumers who are looking to procure a personalized product can also directly access the product studio where the parameters of both the design as well as the product are available simultaneously for customization.

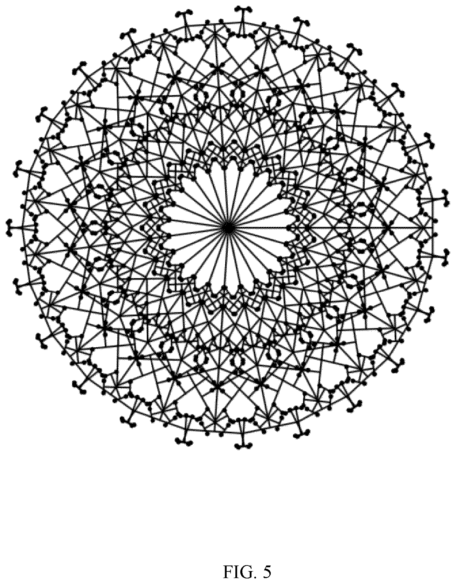

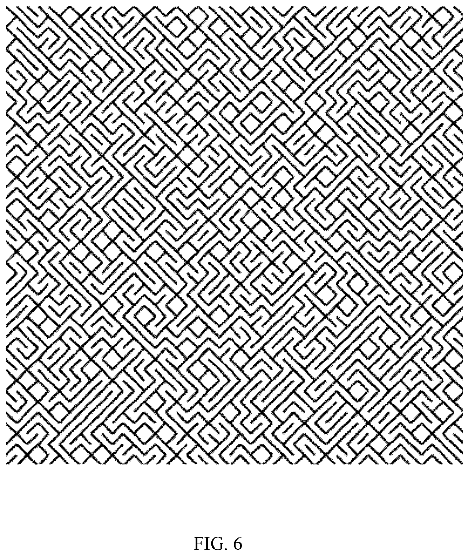

Moreover, for some algorithms specific techniques to transform user input to parameters have been implemented. For example:
- The textual input such as a favorite memory or a favorite quote can be converted to the personalized design, using a prime factor tree generative design algorithm. FIG. 5 shows how an exemplary favorite quote is converted into the personalized design, in accordance with some embodiments of the present disclosure. For the personalized design generated in FIG. 5, the exemplary favorite quote considered is: "Life is what happens to you when you are busy making other plans".
- A memorable date is taken the personalized input which goes into the input of the Truchet generative design algorithm to generate the personalized designs. FIG. 6 shows how a memorable date (15 Aug 1947) is converted into the personalized design, in accordance with some embodiments of the present disclosure.

The methods and systems of the present disclosure transform any user defined input into design parameters which can be used by any generative design algorithm to generate the personalized designs. As the methods and systems of the present disclosure generates a unique hash value for each unique personalized input of the user, the personalized designs generated also are unique and exclusive personalized designs. Hence, the ownership of singular design rights of each product comprises a unique verifiable signature. Since every personalized design generated by the methods and systems of the present disclosure is uniquely determined by the choice of the generative design algorithm and its design parameters, hence it is retraceable and reproducible.

Further, the methods and systems of the present disclosure provide a platform for the customer to create a new generative design of interest (a new generative design algorithm), to generate their own aesthetic personalized designs. Hence the methods and systems of the present disclosure provide the democratized design content platform to connect the retailers, designers or digital artists or creative coders or generative artists (design ecosystem players) and the customers. Further, since the personalized designs are generated in the form of the NFT tokens, the methods and systems of the present disclosure provides a most reliable way to help trace back the design to its source (proof of provenance) and also as proof of ownership of the generative design.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of generating the personalized designs based on the personalized input provided by the user. The present disclosure solves the technical problems in the art with the methods and systems for generating personalized designs, which provides an aesthetic generative art for mass personalization of the designs.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items, or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), comprising:
receiving, via one or more hardware processors, a personalized input whose personalized design is to be generated, from a user, wherein the personalized input is one of (i) a text, (ii) an image, (iii) a video, (iv) an audio, (v) a date-time stamp, and (vi) a number (202);
allowing, via the one or more hardware processors, the user to select a generative design algorithm out of a plurality of generative design algorithms stored in a repository, wherein each of the plurality of generative design algorithms comprises a plurality of design parameters (204);
generating, via the one or more hardware processors, a hash value of the personalized input using a secure hash algorithm (206);
converting, via the one or more hardware processors, the hash value to obtain a decimal value of the personalized input using a hash-to-decimal conversion technique (208);
determining, via the one or more hardware processors, a design parameter value of each of the plurality of design parameters of the selected generated design algorithm, using the decimal value and a plurality of design attributes of each of the plurality of design parameters, by employing a random number generating technique (210); and
generating, via the one or more hardware processors, a personalized design for the personalized input, by passing the design parameter value of each of the plurality of design parameters to the selected generative design algorithm (212).

2. The processor-implemented method (200) as claimed in claim 1, further comprising: tokenizing, via the one or more hardware processors, the personalized design generated for the personalized input as a non-fungible token in blockchain (214).

3. The processor-implemented method (200) as claimed in claim 1, further comprising:
validating and tuning, via the one or more hardware processors, the plurality of design parameters of a customized generative design algorithm generated by the user (216);
verifying, via the one or more hardware processors, a parameter range of each of the plurality of design parameters of the customized generative design algorithm (218);
validating, via the one or more hardware processors, a design output generated by the customized generative design algorithm (220); and
adding, via the one or more hardware processors, the customized generative design algorithm to the plurality of generative design algorithms (222).

4. The processor-implemented method (200) as claimed in claim 1, wherein each generative design algorithm of the plurality of generative design algorithms comprises a unique set of physics-based models and a predefined set of rules.

5. The processor-implemented method (200) as claimed in claim 1, wherein generating the hash value of the personalized input using the secure hash algorithm, comprises:
translating the personalized input to obtain a binary string of the personalized input, using an encoding technique (206a);
appending and adding binary digits to the binary string of the personalized input, to obtain a transformed binary string of the personalized input, wherein the binary digits are appended and added until the transformed binary string becomes a multiple of predefined number of bits, using the secure hash algorithm (206b); and
generating the hash value of the personalized input by applying a cryptographic hash function of the secure hash algorithm and performing a set of bitwise operations on the transformed binary string (206c).

6. A system (100), comprising:
a memory (102) storing instructions;
one or more input/output (I/O) interfaces (106);
one or more hardware processors (104) coupled to the memory (102) via the one or more I/O interfaces (106), wherein the one or more hardware processors (104) are configured by the instructions to:
receive a personalized input whose personalized design is to be generated, from a user, wherein the personalized input is one of (i) a text, (ii) an image, (iii) a video, (iv) an audio, (v) a date-time stamp, and (vi) a number;
allow the user to select a generative design algorithm out of a plurality of generative design algorithms stored in a repository, wherein each of the plurality of generative design algorithms comprises a plurality of design parameters;
generate a hash value of the personalized input using a secure hash algorithm;
convert the hash value to obtain a decimal value of the personalized input using a hash-to-decimal conversion technique;
determine a design parameter value of each of the plurality of design parameters of the selected generated design algorithm, using the decimal value and a plurality of design attributes of each of the plurality of design parameters, by employing a random number generating technique; and
generate a personalized design for the personalized input, by passing the design parameter value of each of the plurality of design parameters to the selected generative design algorithm.

7. The system as claimed in claim 6, wherein the one or more hardware processors (104) are further configured to tokenize the personalized design generated for the personalized input as a non-fungible token in blockchain.

8. The system as claimed in claim 6, wherein the one or more hardware processors (104) are further configured to:
validate and tune the plurality of design parameters of a customized generative design algorithm generated by the user;
verify a parameter range of each of the plurality of design parameters of the customized generative design algorithm;
validate a design output generated by the customized generative design algorithm; and
add the customized generative design algorithm to the plurality of generative design algorithms.

9. The system as claimed in claim 6, wherein each generative design algorithm of the plurality of generative design algorithms comprises a unique set of physics-based models and a predefined set of rules.

10. The system as claimed in claim 6, wherein the one or more hardware processors (104) are configured to generate the hash value of the personalized input using the secure hash algorithm, by:
translating the personalized input to obtain a binary string of the personalized input, using an encoding technique;
appending and adding binary digits to the binary string of the personalized input, to obtain a transformed binary string of the personalized input, wherein the binary digits are appended and added until the transformed binary string becomes a multiple of predefined number of bits, using the secure hash algorithm; and
generating the hash value of the personalized input by applying a cryptographic hash function of the secure hash algorithm and performing a set of bitwise operations on the transformed binary string.

11. One or more non-transitory machine-readable information storage mediums comprising one or more instructions which when executed by one or more hardware processors cause:
receiving a personalized input whose personalized design is to be generated, from a user, wherein the personalized input is one of (i) a text, (ii) an image, (iii) a video, (iv) an audio, (v) a date-time stamp, and (vi) a number;
allowing the user to select a generative design algorithm out of a plurality of generative design algorithms stored in a repository, wherein each of the plurality of generative design algorithms comprises a plurality of design parameters;
generating a hash value of the personalized input using a secure hash algorithm;
converting the hash value to obtain a decimal value of the personalized input using a hash-to-decimal conversion technique;
determining a design parameter value of each of the plurality of design parameters of the selected generated design algorithm, using the decimal value and a plurality of design attributes of each of the plurality of design parameters, by employing a random number generating technique; and
generating a personalized design for the personalized input, by passing the design parameter value of each of the plurality of design parameters to the selected generative design algorithm.

12. The one or more non-transitory machine-readable information storage mediums as claimed in claim 11, wherein the one or more instructions which when executed by one or more hardware processors further cause: tokenizing the personalized design generated for the personalized input as a non-fungible token in blockchain.

13. The one or more non-transitory machine-readable information storage mediums as claimed in claim 11, wherein the one or more instructions which when executed by one or more hardware processors further cause:
validating and tuning the plurality of design parameters of a customized generative design algorithm generated by the user;
verifying a parameter range of each of the plurality of design parameters of the customized generative design algorithm;
validating a design output generated by the customized generative design algorithm; and
adding the customized generative design algorithm to the plurality of generative design algorithms.

14. The one or more non-transitory machine-readable information storage mediums as claimed in claim 11, wherein each generative design algorithm of the plurality of generative design algorithms comprises a unique set of physics-based models and a predefined set of rules.

15. The one or more non-transitory machine-readable information storage mediums as claimed in claim 11, wherein generating the hash value of the personalized input using the secure hash algorithm, comprises:
translating the personalized input to obtain a binary string of the personalized input, using an encoding technique;
appending and adding binary digits to the binary string of the personalized input, to obtain a transformed binary string of the personalized input, wherein the binary digits are appended and added until the transformed binary string becomes a multiple of predefined number of bits, using the secure hash algorithm; and
generating the hash value of the personalized input by applying a cryptographic hash function of the secure hash algorithm and performing a set of bitwise operations on the transformed binary string.
